Europäisches Patentamt

European Patent Office

Office européen des brevets

(19)

(11) Publication number: **0 002 844**
**B1**

# (12) EUROPEAN PATENT SPECIFICATION

(45) Date of publication of patent specification: **13.04.83**

(51) Int. Cl.³: **B 65 D 77/18**

(21) Application number: **78200313.1**

(22) Date of filing: **22.11.78**

(54) Clamp binder and a method of mounting the same.

(30) Priority: **23.11.77 GB 4882677**

(43) Date of publication of application:
**11.07.79 Bulletin 79/14**

(45) Publication of the grant of the patent:
**13.04.83 Bulletin 83/15**

(84) Designated Contracting States:
**BE CH DE FR GB NL SE**

(56) References cited:
**US - A - 3 417 438**
**US - A - 3 875 618**

(73) Proprietor: **Madsen, Erik**
**Jens Juulsvej 13**
**8260 Viby J. (DK)**

(72) Inventor: **Madsen, Erik**
**Jens Juulsvej 13**
**8260 Viby J. (DK)**

(74) Representative: **Urbanus, Henricus Maria, Ir. et al,**
**c/o Vereenigde Octrooibureaux Nieuwe Parklaan**
**107**
**NL-2587 BP 's-Gravenhage (NL)**

Courier Press, Leamington Spa, England

Clamp binder and a method of mounting the same.

The invention relates to a clamp binder for clamping about a material portion such as constricted end portion of bags or of sausage casings, comprisings a U-shaped member for insertion over the material portion from one side thereof, an apertured cross member mountable against the opposite side of the material portion so as to receive through its aperture the free leg ends of the U-member, with the material portion clamped between the cross member and the bottom portion of the U-member, and a wedge member adapted to be forced inwardly between the free leg ends from the rear or outer side of the cross member into a locking position in order to lock the U-member against retraction from the cross member, and a method of mounting the clamp binder.

Such clamp binders, as described in the Danish patent application 2572/77 published on December 11, 1978, are mountable e.g. on the constricted end portions of bags or of sausage casings in order to close the same. Especially as far as sausages are concerned the binding should be effected under well controlled force conditions, because a relatively high clamping force is necessary for making the binder hold on the slippery sausage casing, this especially applying to the sausage end at which the binder is combined with a suspension member for the suspension of the sausage during the following smoking treatment thereof. On the other hand the binding force should not be so high as to cause damage to the casing. Since the casing material in the constriction area is not resiliently compressible to any substantial degree and not of any exactly constant thickness from casing to casing it is preferable to mount the binder by applying a well controlled clamping force to the binder parts and then fix the parts to each other in their mutual final positions as obtained by said clamping force, as also disclosed in my copending German patent application No. 2656581.

The binder of the earlier proposed type initially referred to comprises a U-member which is pushed over the constriction from one side thereof so as to have its free legs introduced through an aperture in a cross member located adjacent the opposite side of the constriction. In said final position of these two parts the leg ends projecting beyond the cross members are forced away from each other by introduction of a wedge member therebetween, and thereby the legs of the U-member are locked against retraction from the cross member. This is a simple mechanical way of fixing the clamp binder in its final position, but in mass production of sausages or similar articles to be bound it is difficult to handle the three individual binder elements, viz. the U-member, the cross member and the wedge member.

US patent specification 3,875,618 describes a clamp binder comprising a U-member, a cross member and a wedge. The wedge is connectable to the cross member by a frangible connection to facilitate assembly of the binder. The U-member consists of a strap the ends of which should be guided through the narrow spaces between the cross member and the wedge. This is time consuming and, moreover, inserting of the free strap ends in the cross member must be done very carefully to avoid breaking loose and pushing away the wedge during inserting of the free strap ends; so this construction must be considered unusable in practice especially for automatic handling.

It is the object of this invention to provide a binder of the type in question which is easy to handle and yet efficient in use.

This is achieved according to the invention if the wedge member is premounted adjacent the outer end portion of the legs of the U-member in such a position that it leaves the end of the U-member open for lateral insertion over said material portion and in such a manner that it is introduceable through said aperture together with the leg ends and thereafter displaceable along the leg ends into said locking position. These features provide a clamp binder of the said wedge lock type in which the wedge member is integrated with the U-member in such a manner that when the U-member and the cross member have reached their final mutual positions the wedge member will automatically assume its correct initial position for thereafter being displaceable into its locking position. Thus, the wedge member is not supplied and guided to the mounting place as a separate element, nor will it be broken loose and pushed away by inserting the U-member ends in the cross member, facilitating highly the mounting work.

It is an outstanding feature of the invention that the wedge member may be provided as two half-pieces releasably associated with the respective leg ends of the U-member, whereby a very advantageous binder is achieved.

In the following the invention is described in more detail, by way of example, with reference to the drawing, in which:

Figs. 1—4 are views illustrating the prior proposal of a clamp binder as described in the Danish patent application 2572/77, while

Figs. 5—8 are illustrative of a preferred embodiment of the invention and of the method of mounting the binder.

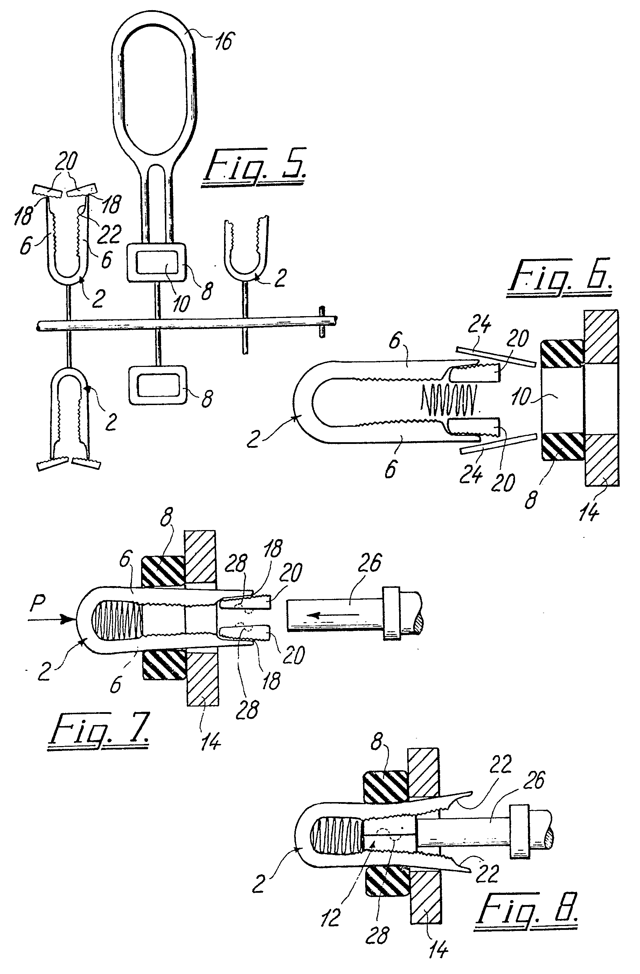

For facilitating the understanding of the invention reference is first made to the prior proposal as illustrated in Figs. 1—4. This binder comprises a U-member 2 having a base portion 4 and two leg portions 6, a cross member 8 having an aperture 10, and a wedge member 12. In use, the cross member 8 is placed at one side of the material portion to be bound, e.g. a portion of a sausage casing, and the U-member 2 is introduced over this portion from the other side thereof, such that the legs 6 are pushed through the aperture 10 and the said material portion is confined between the legs 6 and between the U-member base portion 4 and the front side of the cross member 8, as will be particularly clear from Fig. 4 illustrating the final binding result. By this mounting the cross member 8 may be backed by a support 14 while a pressing force P is applied to the outside of the U-member base portion 4 (Fig. 2). When the parts have come to rest in their mutual positions as obtained by the pressure P the wedge member 12 is urged inwardly in the space between the U-member leg portions projecting beyond the cross member 8 (Fig. 2), whereby these leg ends are forced away from each other (Fig. 3), i.e. they are bent outwardly and stabilized by the wedge member so as to be locked against retraction through the aperture 10. Preferably the wedge member is pushed into such a position, as given by the geometric location of its rear side and the known length of the wedge member that the front side thereof will be flush with the front side of the cross member 8 in the final position, whereby the sausage constriction will not be further clamped between the wedge and the U-member base portion 4. The dimensions of the various parts are so adapted that in the final position of the wedge member a very firm holding effect against retraction of the U-member legs will be obtained, irrespective of the individual entrance depth of the legs relative the cross member 8. Upon the wedge member 12 having reaching its final position the rearwardly protruding ends of the legs 6 may be cut, e.g. flush with the rear side of the wedge member, by cutter means not shown, and the final result may be as shown in Fig. 4. Here, and as shown in dotted lines in Fig. 1, the cross member 8 is provided with an integrally formed suspension eye member 16. Preferably the different parts are produced as cast plastic members, e.g. in Nylon, whereby the suspension eye 16 is easily provided as an integral part of one of the elements of the clamp binder. As shown, the cooperative surfaces of the U-member legs and the wedge member may be shaped with teeth or otherwise being rough for ensuring a firm frictional engagement therebetween.

Now, the binder according to the invention as illustrated in Figs. 5—8 is used in a similar manner with the very important exception that the wedge member is not a separate element which should be separately guided, e.g. from a wedge member magazine, into the correct position in the mounting area. In the binder according to the invention the wedge member is associated with the U-member leg ends so as to be introduceable through the cross member aperture 10 along with the leg ends and thereafter automatically assume its correct starting position for being pushed towards its locking position.

Fig. 5 illustrates a plastic casting comprising several of the elements to be used for binders according to the present invention. The cross member 8 is the same as the corresponding element discussed above, and it is shown that one (or some) of the cross members of the casting may be shaped with an integral suspension eye member 16. It also appears that the U-members 2 are shaped generally as discussed above, though with each of the outer leg ends being associated, through a thin strip portion 18, with a generally crosswise disposed half wedge member 20 projecting both inwardly and outwardly relative to the location of the said strip portion 18.

In use, when the U-member 2 of Fig. 5 is caused to be pushed over a material portion such as a sausage casing constriction, the first thing to happen is that the inwardly projecting parts of the half wedge elements 20 will engage the material portion, whereby the elements 20 will be tilted about the strip connector portions 18 so as to get turned into general alignment with the respective U-member legs 6, the outer leg ends being provided with a recess 22 in the interior side suitable for receiving the respective innermost portion of the element 20 such that thereafter, as shown in Fig. 6, the half wedge elements 20 will generally constitute outermost prolongations of the U-member legs 6.

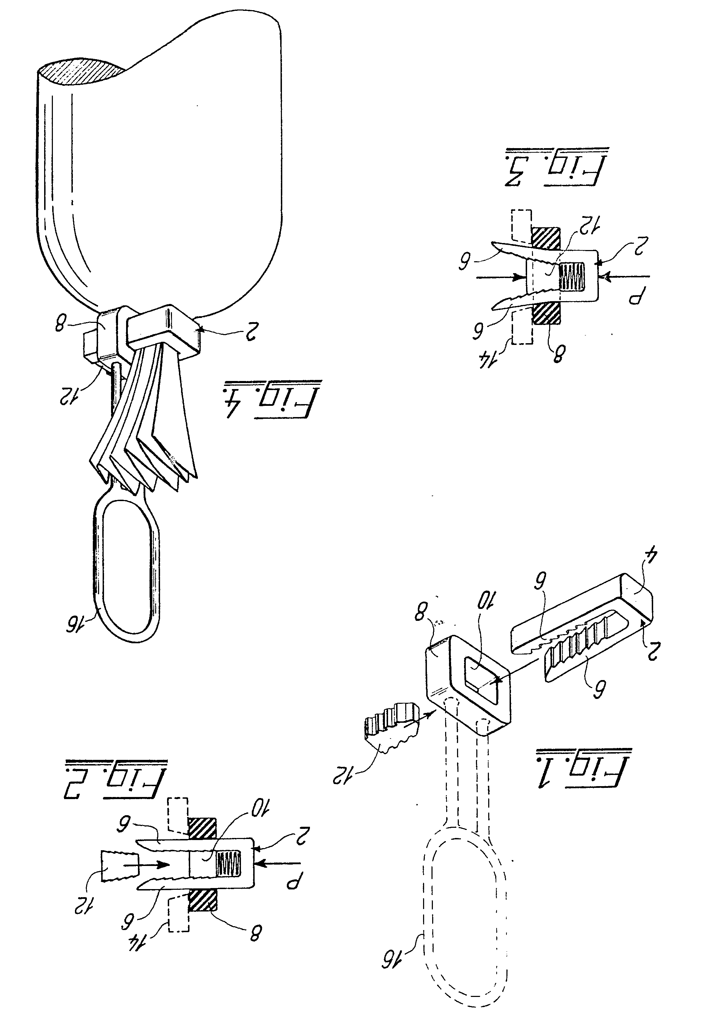

Therefore, when the U-member 2 is pushed over the said material portion, e.g. guided by inclined guiding plates 24 as shown in Fig. 6, the half wedge elements 20 will be introduced through the cross member aperture 10 as leading end portions of the U-member leg ends, and the final position, compared with Fig. 2, will be as shown in Fig. 7. Thereafter a pressing member 26 is forced against the rear surfaces of the half wedge members 20 (Fig. 7), whereby the thin strip connections 18 will be broken and the half wedge members 20 will be moved towards the cross member 8, thereby joining themselves into a wedge member 12 as shown in Fig. 8, but otherwise behaving just like the wedge element 12 of Figs. 1—4.

The interengaging surfaces of the two half wedge elements 20 may be provided with interlocking tongue and groove means as shown in dotted lines at 28 in Figs. 7 and 8, whereby a firm engagement between the two wedge half pieces will be secured. When, as shown, holding teeth are provided between the cooperating surfaces of the combined wedge member 12 and the inside of the U-member legs 6, a firm engagement between the two half wedge members 20 will ensure that the combined wedge member 12 will be held in a well defined position even if the combined wedge member is in holding engagement with the teeth of only one of the U-member leg ends.

## Claims

1. A clamp binder for clamping about a material portion such as a constricted end portion of bags or of sausage casings, comprising a U-shaped member (2) for insertion over the material portion from one side thereof, an apertured cross member (8) mountable against the opposite side of the material portion so as to receive through its aperture (10) the free leg ends of the U-member (2), with the material portion clamped between the cross member (8) and the bottom portion of the U-member (2), and a wedge member (20) adapted to be forced inwardly between the free leg ends from the rear or outer side of the cross member (8) into a locking position in order to lock the U-member (8) into a locking position in order to lock the U-member (2) against retraction from the cross member (8), characterized in that the wedge member (20) is premounted to the U-member (2) adjacent the outer end portion of at least one of the legs (6) of the U-member (2) in such a position that it leaves the end of the U-member (2) open for lateral insertion over said material portion and in such a manner that it is introduceable through said aperture (10) together with the leg ends and thereafter displaceable along the leg ends into said locking position.

2. A clamp binder according to claim 1, characterized in that the wedge member (20) is constituted by two separate half-pieces, each associated with a respective U-member leg end.

3. A clamp binder according to claim 2, in which said half-pieces are provided integrally with said respective leg ends, connected therewith by means of a thin and breakable material portion (18).

4. A clamp binder according to claim 2 or 3, in which the half-pieces are located in respective recesses (22) in the inner sides of the leg end portions.

5. A clamp binder according to claim 4, in which the half-pieces are associated with the outer ends of the respective U-member legs (6) through a short, thin and flexible material portion (18), each half-piece being oriented generally cross-wise of the U-member leg (6) so as to have a portion projecting inwardly from the respective leg end towards the plane of symmetry of the U-member.

6. A clamp binder according to any of the claims 2—5, in which the surface portions of said half-pieces engaging each other when the half-pieces are laid together are provided with interengaging tongue and groove means (28).

7. A clamp binder according to any of the claims 2—6, in which the thickness of the respective half-pieces is so adapted that when the half-pieces are laid together their combined thickness added to the thickness of the opposed U-member legs (6) will correspsond to the cross dimension of the aperture (10) in said cross member (8) such that in the locking position of the combined half-pieces the front ends thereof will be located substantially flush with the front side of the cross member (8) as engaging the material portion to be bound.

8. A clamp binder according to any of the preceding claims, in which the said cross member (8) is integrally provided with a suspension loop or eye member (16).

9. A method of mounting a clamp binder member according to any of the preceding claims on a material portion to be bound, characterized by the steps of placing the said cross member (8) adjacent one side of the material portion and placing the said U-member (2) outside the opposite side thereof, forcing by a predetermined force the cross member (8) and the U-member (2) together so as to cause the free legs (6) of the U-member (2) to embrace the said material portion and get introduced into and through the aperture (10) of the cross member (8) with said wedge member (20) associated with the outer U-member leg end, maintaining said predetermined clamping force between the U-member (2) and the cross member (8) and causing said wedge member (20) to be displaced towards said locking position by or upon breaking the connection (18) between the wedge member (20) and the end of the U-member leg portion (6), and finally releasing the clamp binder from the means for exerting the said predetermined clamping force.

## Patentansprüche

1. Ein Klammer für die Einklemmung von einem Teil eines Gegenstandes, wie z.B. den eingeschnürten Bereich eines Sacks, einer Tüte oder eines Wurstdarms, umfassend einen U-förmigen Teil (2), der auf den Teil des Gegenstandes von der Seite her aufsteckbar ist, einen mit Durchgangsöffnung versehenen Querteil (8), der für die Anlegung gegen die andere Seite des Teils des Gegenstandes und zur Aufnahme der durch die Durchgangsöffnung gestockenen Zweige des U-förmigen Teils mit einem hierbei zwischen dem Querteil und dem Bodenflansch des U-förmigen Teils angeklemmt befindlichen Teil des Gegenstandes ausgeformt ist, und einen keilförmigen Teil (20), der für die Einpressung von der Hinter- oder Aussenseite des Querteils her zwischen den Zweigen des U-förmigen Teils zur Einnahme einer die Zurückziehung des U-förmigen Teils vom Querteil aus verhindernden Verschlussstellung ausgeformt ist, dadurch gekennzeichnet dass der keilförmige Teil (20) sich vorhermontiert nahe dem äusseren Ende der Zweige (6) des U-förmigen Teils (2) auf diesem (2) angebracht und in einer solchen Stellung angeordnet, sodass der U-förmigen Teil (2) in diesem Zustand auf den Teil des Gegenstandes aufsteckbar und durch die Durchgangsöffnung (10) des Querteils (8) mit den Zweigenden durchsteckbar gebildet ist, und verschiebbar längs den Zweigenden zur Einnahme der Verschlussstellung ausgeformt ist.

2. Ein Klammer gemäss Anspruch 1, dadurch gekennzeichnet dass der keilförmige Teil (20) aus zwei getrennten Halbteilen je mit dem entsprechenden Zweigende verbunden besteht.

3. Ein Klammer gemäss Anspruch 2 dadurch gekennzeichnet dass die Halbteile zusammenhängend mit den entsprechenden Zweigende mit einem damit sammenhängenden, dazwischenvorliegenden, dünnen und zerbrechlichen Teil (18) versehen ist.

4. Ein Klammer gemäss Anspruch 2 oder 3 dadurch gekennzeichnet dass die Halbteile sich in entsprechenden Einformungen in der Innenseite der Zweigenden befinden.

5. Ein Klammer gemäss Anspruch 4 dadurch gekennzeichnet dass die Halbteile durch einen kurzen, dünnen und flexiblen Teil (18) mit den äusseren Enden des entsprechenden Zweigs des U-förmigen Teils (6) verbunden sind, wobei die Halbteile hauptsächlich quer zu den Zweigen des U-förmigen Teils (6) orientiert sind, sodass ein Teil davon in Richtung der Symmetrieebene der Zweige orientiert von dem entsprechenden Zweigende nach Innen gerichtet hervorsteht.

6. Ein Klammer gemäss Anspruch 2, 3, 4 oder 5 dadurch gekennzeichnet dass die Oberflächenteile der Halbteile bei Aneinanderliegen zu Ineinandergreifen bestimmt mit ineinandergreiflichen Zungen und Furchen (28) versehen sind.

7. Ein Klammer gemäss Anspruch 2, 3, 4, 5 oder 6 dadurch gekennzeichnet dass die Dicke der entsprechenden Halbteile so angepasst ist, dass bei Aneinanderliegen der Halbteile die zusammenaddierte Dicke der beiden Halbteile inklusive der beiden gegenüberstehenden Zweige (6) des U-förmigen Teils entspricht der Quere der Durchgangsöffnung (10) des Querteils (8), sodass bei der Einnahme der Verschlussstellung der aneinanderliegenden Halbteile deren Vorderenden hauptsächlich längs der Vorderseite des in Eingriffs mit dem Teil des Gegenstandes bringlichen Querteils (8) angeordnet sind.

8. Ein Klammer gemäss Anspruch 1, 2, 3, 4, 5, 6 oder 7 dadurch gekennzeichnet dass der Querteil (8) zusammenhängend damit mit einer Aufhängelücke oder mit einem mit Loch versehenen Organ (16) versehen ist.

9. Verfahren für die Montierung eines Klammerorgans gemäss Anspruch 1, 2, 3, 4, 5, 6, 7 oder 8 für die Bindung von einem Teil eines Gegenstandes dadurch gekennzeichnet dass das Verfahren Verfahren-Stufen wie folgt umfasst, und zwar dass der Querteil (8) zum Anliegen gegen eine Seite des Teils des Gegenstandes angeordnet wird, dass der U-förmige Teil (2) aussenseitig an die gegensätzliche Seite des Teils des Gegenstandes placiert wird, dass der Querteil (8) und der U-förmige Teil (2) mit einer vorherbestimmten Kraft gegeneinander gepresst werden, sodass hierbei die freien Zweige (6) des U-förmigen Teils (2) zum Umgreifen des Teils des Gegenstandes und auch einschliesslich des an das freie Zweigende des U-förmigen Teils angeknüpften keilförmigen Teils (20) zum Einstecken sowie Durchstecken von der Durchgangsöffnung (10) des Querteils (8) unter Aufrechthaltung der vorherbestimmten Anpressungskraft zwischen dem U-förmigen Teil (2) und dem Querteil (8) gebracht werden, dass der keilförmige Teil (20) gegen die Verschliessstellung gleichzeitig mit oder nach Brechen der Verbindung (18) zwischen dem keilförmigen Teil (20) und dem Zweigende (6) des U-förmigen Teils verschoben wird und dass schliesslich das Klammerorgan vom Mittel, das die Pressungskraft ausgeübt hat, befreit wird.

**Revendications**

1. Dispositif de ligature déstiné à être mis autour d'une partie d'un objet laquelle est à lacer par préhension, c.-à-d. par exemple la partie à lacer d'un sac, d'un sachet ou d'une saucisse, où le dispositif est constitu par un élément présentant la forme d'un U (2), lequel de coté peut être mis en place préhentant sur la partie à lacer de l'objet, par un élément transversal (8) fourni d'un trou de passage, où l'élément ces conçu pour être appliqué contre le coté opposé de la partie à lacer de l'objet comme pour recevoir les branches de l'élément en U passées par le trou de l'élément transversal de telle façon que ils préhantent la partie à lacer de l'objet lequel, en cas de mis en place, se trouve entre l'élément transversal et le fond de l'élément en U, et par un élément en forme d'un coin (20), lequel est conçu pour être forcé en place du coté derrière ou de la face de l'élément transversal pour être posé entre les branches de l'élément en U en occupant une position de serrage et au moyen de ça l'élément de forme d'un coin empêche un repoussement de l'élément en U, ce dispositif étant caractérisé en ce que l'élément en forme d'un coin (20) est prémonté à proximité de las extrémitées des branches (6) de l'élément en U (2) y posé tel que l'élément en U (2) peut être mis en saisissant sur la partie à lacer de l'objet et avec les extrémitées en forme d'un U étant poussées par le trou (10) de l'élément transversal (8), y en outre que l'élément en forme d'un coin est posé tel qu'il est déplaçable le long des extrémitées vers la position de serrage et pour l'occupation de cette position là.

2. Dispositif de ligature suivant la revendication 1 caractérisé en ce que l'élément en forme d'un coin (20) est constitué au moyen des moitiées séparées et que chaque moitié est connectée avec l'une des extrémitées des branches de l'élément en forme d'un U.

3. Dispositif de ligature suivant la revendication 2 caractérisé en ce que les moitiées sont fournies intégralement et respectivement avec les extrémitées des branches de l'élément en forme d'un U en étant connectées avec celles-ci au moyen, pour chaque, d'une liaison matérielle mince et capable d'être déchirée (18).

4. Dispositif de ligature suivant la revendication 2 ou 3 caractérisé en ce que les moitiées sont situées dans des embrasures (22) formées dans les cotés intérieurs des extrémitées des branches de l'élément en forme d'un U.

5. Dispositif de ligature suivant la revendication 4 caractérisé en ce que les moitiées sont attachées respectivement à les extrémitées des branches (6) de l'élément en forme d'un U au moyen, pour chaque, d'une liaison matérielle courte, mince et flexible (18) et que chaque moitié essentiellement est orientée en travers des branches (6) de l'élément en forme d'un U en ayant de celles-ci une saillie étant dirigée respectivement de l'extrémité d'une branche vers l'intérieur et aussi vers le plan de symétrie des élément en forme d'un U.

6. Dispositif de ligature suivant la revendication 2, 3, 4 ou 5 caractérisé en ce que les surfaces des moitiées quand étant mises coté à coté déstiné à s'engrener sont fournies avec des tongues et des sillonnes (28).

7. Dispositif de ligature suivant la revendication 2, 3, 4, 5 ou 6 caractérisé en ce que respectivement l'épaisseur des moitiées est adaptée d'une telle façon que quand les moitiées sont mises coté à coté la somme de l'épaisseur des deux moitiées et de l'épaisseur des deux branches (6) de l'élément en forme d'un U est en concordance avec la dimension en travers du trou (10) de l'élément transversal (8) tel que en occupant la position de serrage des moitiées mises coté à coté les extrémitées à face des moitiées essentiellement sont placées le long du coté à face de l'élément transversal (8) lequel est conçu capable d'être posé s'engrenant avec la partie à lacer de l'objet.

8. Dispositif de ligature suivant la revendication 1, 2, 3, 4, 5, 6 ou 7 caractérisé en ce que l'élément transversal (8) integralement est fourni d'une boucle de suspension ou d'un organe de l'oeil (16).

9. Procédé pour le montage d'un organe de ligature suivant la revendication 1, 2, 3, 4, 5, 6, 7 ou 8 déstiné à lacer par préhension d'une partie d'un objet caractérisé en ce que le procédé comprend des étapes de procédé suivants, que l'élément transversal (8) est appliqué contre un coté de la partie à lacer de l'objet, que l'élément en forme d'un U (2) extérieurement est posé au coté opposé de la partie à lacer de l'objet, que l'élément transversal (8) et l'élément en forme d'un U (2) au moyen d'une force predeterminée sont poussés l'un contre l'autre tel que les extrémitées des branches (6) de l'élément en forme d'un U (2) saisissent la partie à lacer de l'objet et aussi avec l'élément de la forme d'un coin (20), lequel est attaché à l'extrémité des branches de l'élément en forme d'un U, arrivent à et passent par le trou de passage (10) de l'élément transversal (8), la force à pousser en étant maintenue entre l'élément en forme d'un U (2) et l'élément transversal (8), que l'élément de la forme d'un coin (20) est poussé à la position de serrage simultanément avec ou après la rupture de la liaison (18) entre l'élément de la forme d'un coin (20) et l'extrémité des branches (6) de l'élément en forme d'un U et que enfin l'organe de ligature est dégagé de ces organes, qui ont produit la force à pousser.

_Fig. 5._

_Fig. 6._

_Fig. 7._

_Fig. 8._

_Fig.1._

_Fig.2._

_Fig.3._

_Fig.4._